# EUROPÄISCHE PATENTSCHRIFT

(11) **EP 0 548 459 B1**
(45) Veröffentlichungstag und Bekanntmachung des Hinweises auf die Patenterteilung: **25.09.1996**
(21) Anmeldenummer: 92110917.9
(22) Anmeldetag: 27.06.1992
(51) Int. Cl.: F15B 13/16, G05B 11/50

(54) **Vorrichtung zur Umwandlung eines elektrischen Stromsignals in eine mechanische Stellgrösse**
Device to converting an electrical signal to a mechanical position
Dispositif pour convertir un signal électrique vers une position mécanique

(30) Priorität: 20.12.1991 DE 4142269
(43) Veröffentlichungstag der Anmeldung: 30.06.1993
(73) Patentinhaber: SENSYCON GESELLSCHAFT FÜR INDUSTRIELLE SENSORSYSTEME UND PROZESSLEITTECHNIK MBH, D-30179 Hannover (DE)
(72) Erfinder: Riensche, Heinrich, W-3062 Bückeburg (DE)
(74) Vertreter: Meissner, Peter E., Dipl.-Ing.

(56) Entgegenhaltungen:
- EP-A- 0 018 832
- EP-A- 0 286 722
- DE-A- 1 601 722
- DE-A- 2 947 627
- FR-A- 2 440 575
- US-A- 3 279 490
- US-A- 4 329 910

## Beschreibung

Die Erfindung bezieht sich auf eine Vorrichtung zur Umwandlung eines elektrischen Stromsignals in eine mechanische Stellgröße, bestehend im wesentlichen aus einem pneumatischen Stellglied mit Schubstange, einem pneumatischen Verstärker, einem Druckluftanschluß und einem elektropneumatischen Signalwandler, der einen Elektromagneten mit Spule, Eisenkreis und Luftspalt, eine Düsen/Prallplatteneinrichtung und einen auf einem Spannband schwenkbar gelagerten Hebel aufweist, der an seinem einen Ende die Prallplatte und an seinem anderen Ende einen gegenüber dem Luftspalt des Elektromagneten angeordneten Permanentmagneten trägt, wobei der Abstand zwischen Prallplatte und Düse proportional zu dem als Eingangssignal durch den Elektromagneten fließenden Strom veränderlich ist und der dementsprechend veränderte Staudruck in der Düse nach pneumatischer Verstärkung direkt zur Ansteuerung des pneumatischen Stellgliedes benutzt wird, und wobei eine Rückführung der mechanischen Stellgröße in den elektropneumatischen Signalwandler vorgesehen ist.

Für den gleichen Einsatzzweck ist aus der DE-AS 22 64 220 ein elektropneumatischer Signalwandler mit einem elektrischen Meßgerät und einem pneumatischen Nachlaufgerät bekanntgeworden, bei dem die Kopplung des Nachlaufgeräts mit dem Meßgerät über eine Düsen/Prallplatteneinrichtung erfolgt. Die die Düse und die Prallplatte tragenden Steuerglieder sind in Kreuzfedergelenken gelagert, deren Schwenkachsen parallel zueinander in ein und derselben Ebene liegen sollen. Die bekannte Vorrichtung arbeitet nach dem Prinzip des Wegvergleichs. Der Hub des Tauchmagneten wird in eine Bewegung der Prallplatte umgesetzt und die Düse folgt dieser Bewegung durch Nachregeln des Druckes. Ein erheblicher Nachteil dieser Vorrichtung besteht darin, daß die im Düsenbereich realisierbaren Wege von wenigen Zehntelmillimetern verglichen werden müssen mit dem Weg der mechanischen Stellgröße, der im Bereich von 10 bis 100 mm liegt. Dadurch wird ein Hebelverhältnis von 1:100 bis 1:1000 erforderlich, das nur mit sehr langen Hebeln oder mit einer aufwendigen mechanischen Übertragung realisiert werden kann. Dadurch wird das Gerät verhältnismäßig groß und teuer und seine Justage ist sehr schwierig. Hinzukommt, daß bei derartigen Hebelverhältnisses erhebliche Hystersefehler unvermeidbar sind, die weit über dem heute geforderten Wert von 0,5% liegen. Schließlich müssen bei der bekannten Vorrichtung verhältnismäßig große Massen bewegt werden, so daß das Gerät sehr erschütterungsempfindlich ist und deswegen für den direkten Anbau an beispielsweise Prozeßventile kaum in Betracht kommt.

Aus der EP-A-0 286 722 ist ein elektropneumatischer Stellungsregler bekannt, bei dem das elektrische Eingangssignal über ein Spule-Permamentmagnet-System und die analoge Stellung einer Düse-Prallplatte-Anordnung in einen analogen pneumatischen Druck abgebildet wird und bei dem die Rückkopplung elektrisch über einen pneumatisch-elektrischen Wandler auf das Spule-Magnet-Eingangssystem erfolgt

In der Schrift DE 32 05 576 C 2 ist eine Vorrichtung zur Umformung elektrischer Signale in pneumatische Signale angegeben, bei dem ebenfalls über ein Elektromagnet-Permanentmagnet-System eine der elektrischen Eingangsgröße analoge Verdrehung einer Prallplatte erzeugt wird, so daß eine entsprechende Druckänderung über einen pneumatischen Verstärker als Ausgangsgröße zur Verfügung steht. Eine dort angegebene Lagerung des Systems Permanentmagnet-Prallplatte sieht als solche ein Spannband vor.

Der Erfindung lag die Aufgabe zugrunde, eine Vorrichtung der eingangs genannten Art so weiterzubilden, daß die geschilderten Nachteile nicht auftreten können. Insbesondere sollen die bewegten Massen so klein wie möglich gehalten werden, um eine Erschütterungsfestigkeit bis etwa 10g im Frequenzbereich bis 80 Hz und einen Hysteresefehler kleiner 1% erreichen zu können. Angestrebt werden bewegte Massen von weniger als 1 Gramm.

Zur Lösung dieser Aufgabe wird erfindungsgemäß vorgeschlagen, die gattungsmäßige Vorrichtung so auszubilden, daß ein Ende des Spannbandes um dessen Längsachse drehbar gelagert ist und daß senkrecht zur Längsachse ein Rückführhebel angeordnet ist, dessen eines Ende mit dem drehbaren Ende des Spannbandes drehfest verbunden und dessen freies Ende mit der Schubstange des pneumatischen Stellgliedes gekoppelt ist.

In weiterer Ausbildung des Erfindungsgedankens ist vorgesehen, daß das freie Ende des Rückführhebels mittels einer Feder gegen eine mit der Schubstange fest verbundene Kurvenscheibe vorgespannt ist und daß das freie Ende des Rückführhebels über eine Führungsrolle auf der Kurvenscheibe abgestützt ist.

Die erfindungsgemäße Vorrichtung arbeitet nach dem Prinzip des Kraftvergleichs. Die Stellung der Schubstange wird über den Rückführhebel direkt auf die Prallplatte abgebildet, wobei das vorhandene Spannband als elastisch verformbares Element benutzt wird. Über eine entsprechende Auslegung der Federkonstante können große Wege des Stellgliedes in sehr kleine Hübe der Prallplatte umgesetzt werden. Im elektropneumatischen Signalwandler (z.B. gemäß DE-PS 32 05 576) muß nur das Spannband einseitig um seine Achse drehbar gelagert und für die drehfeste Anbinding eines Hebels ausgebildet sein. Es werden keine zusätzlich bewegten Massen benötigt, so daß durch die Rückführung der mechanischen Stellgröße die hervorragenden Eigenschaften des elektropneumatischen Signalwandlers hinsichtlich Erschütterungsunempfindlichkeit und Hysteresefehler nicht beeinträchtigt werden. Da die bewegte Masse weit unter einem Gramm liegt, erreicht man bei 80 Hz ohne weiteres eine Erschütterungsfestigkeit von 5 g und einen Hysteresefehler kleiner 0,5 %.

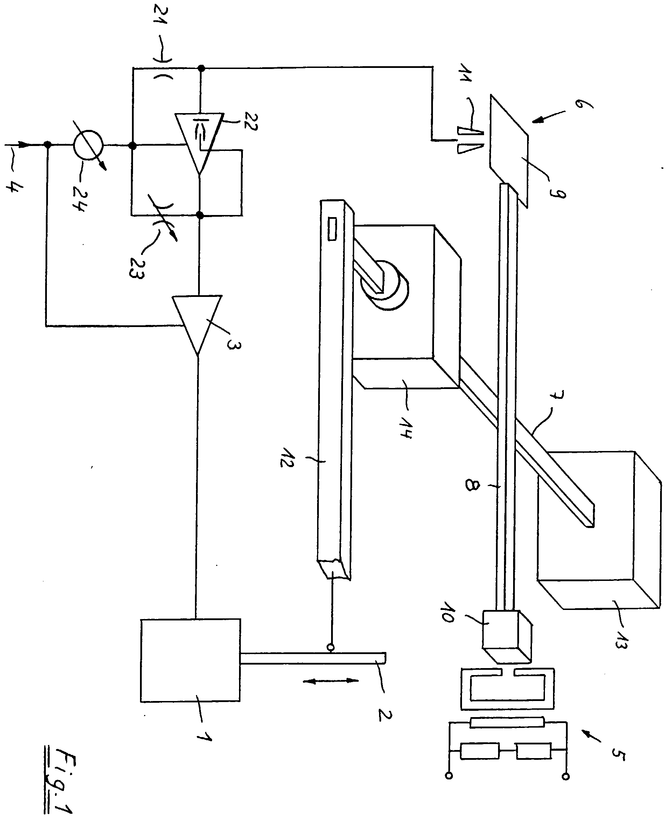

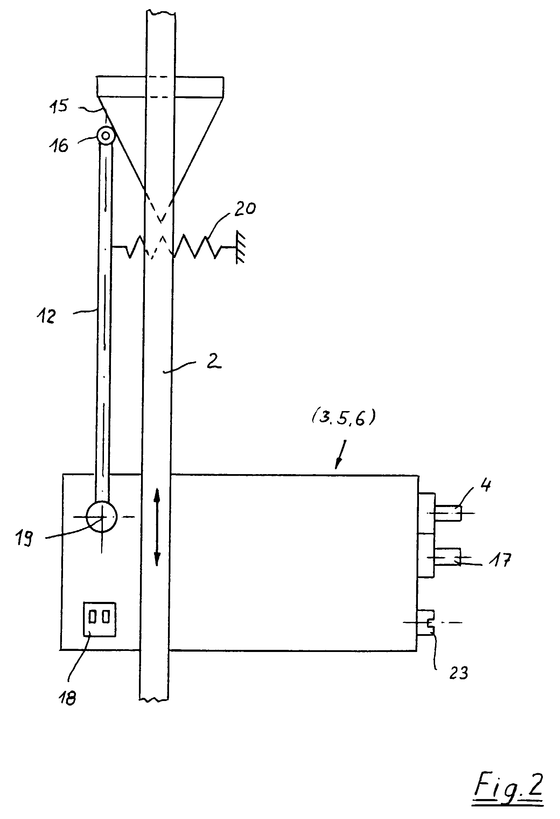

Weitere Einzelheiten der Erfindung werden anhand der in den Figuren 1 und 2 dargestellten Ausführungsbeispielen näher erläutert.
- Fig. 1: zeigt in vereinfachter Darstellung eine Vorrichtung gemäß Anspruch 1,
- Fig. 2: zeigt Einzelheiten einer Vorrichtung nach den Ansprüchen 2 und 3.

In Fig .1 ist teils perspektivisch, teils stark vereinfacht eine Vorrichtung gemäß der Erfindung dargestellt. Das pneumatische Stellglied 1 weist eine Schubstange 2 auf, an die ein Rückführhebel 12 angekoppelt ist. Der Rückführhebel 12 ist drehfest mit dem Spannband 7 verbunden, auf dem der Hebel 8 mit der Prallplatte 9 und dem Permanentmagneten 10 angebracht sind. Dabei befindet sich der Permanentmagnet 10 gegenüber dem Luftspalt eines Elektromagneten 5 mit Spule und Eisenkreis, während die Prallplatte 9 zusammen mit der Düse 11 die Düsen/Prallplatteneinrichtung 6 bildet. Mit 13 und 14 sind Einspannblöcke für das Spannband 7 bezeichnet, die in der Praxis aus Teilen eines Gehäuses o.dgl. bestehen. Im vorderen Block 14 ist das Spannband 7 um seine Achse drehbar gelagert. Zu der Vorrichtung gehören ferner ein pneumatischer Verstärker 3, ein Druckluftanschluß 4, eine Drossel 21 ein Mitteldruckverstärker 22 mit einstellbarer xp-Drossel 23 und ein Druckregler 24. Im Elektromagneten 5 wird ein der Eingangsgröße (dem Stromsignal) proportionaler magnetischer Fluß erzeugt, der eine Ortsveränderung des Permanentmagneten 10 bewirkt, auf den das Spannband 7 als Rückstellfeder wirkt. Eine Drehung des Hebels 8 um die Achse des Spannbandes bewirkt eine Veränderung des Abstandes zwischen Prallplatte 9 und Düse 11 und eine damit proportionale Änderung des Staudrucks in der Düse 11. Dadurch wird am Ausgang des Mitteldruckverstärkers 22 ein veränderliches pneumatisches Signal erzeugt, das im Verstärker 3 so weit verstärkt wird, daß es direkt zur Ansteuerung des pneumatischen Stellgliedes 1 benutzt werden kann. Dieses erzeugt seinerseits eine mechanische Stellgröße, mit der eine Klappe, ein Ventil o.dgl. verstellt werden kann. Über den Rückführhebel 12 wird der Regelkreis geschlossen, wobei es im Spannband 7 zu einem Vergleich zwischen der tatsächlichen Position des Stellgliedes mit der durch das elektrische Stromsignal vorgegebenen Position nach dem Kraftprinzip kommt.

Fig. 2 zeigt im Ausschnitt eine Möglichkeit für die Ankopplung des Rückführhebels 12 an die Schubstange 2. Dabei ist eine Kurvenscheibe 15 fest mit der Schubstange 2 verbunden, während der Rückführhebel 12 drehfest mit dem Spannband verbunden ist, dessen eines Ende um die Achse 19 drehbar gelagert ist. Der Rückführhebel 12 wird durch die Feder 20 gegen die Kurvenscheibe 15 vorgespannt und stützt sich auf dieser über die Führungsrolle 16 ab. Elektromagnet 5, Düsen/Prallplatteneinrichtung 6 und Verstärker 3 sind in einem Gehäuse untergebracht, an dem ein Druckluftanschluß 4, ein Ausgangs 17 für ein pneumatisches Signal und ein Eingang 18 für ein Steuersignal angebracht sind. Außerdem ist am Gehäuse eine Einstellschraube 23a für die einstellbare xp-Drossel 23 vorgesehen. Über die Kurvenscheibe 15 wird die Auf- und Abbewegung der Schubstange in eine Schwenkbewegung des Rückführhebels 12 umgesetzt, die eine Torsion des Spannbandes und damit ein Ist-/Sollvergleich nach dem Kraftprinzip bewirkt.

## Patentansprüche

1. Vorrichtung zur Umwandlung eines elektrischen Stromsignals in eine mechanische Stellgröße, bestehend im wesentlichen aus einem pneumatischen Stellglied (1) mit Schubstange (2), einem pneumatischen Verstärker, einem Druckluftanschluß (4) und einem elektropneumatischen Signalwandler, der einen Elektromagneten (5) mit Spule, Eisenkreis und Luftspalt, eine Düsen/Prallplattenein- richtung (6) und einen auf einem Spannband (7) schwenkbar gelagerten hebel (8) aufweist, der an seinem einen Ende die Prallplatte (9) und an seinem anderen Ende einen gegenüber dem Luftspalt des Elektromagneten (5) angeordneten Permanentmagneten (10) trägt, wobei der Abstand zwischen Prallplatte (9) und Düse (11) proportional zu dem als Eingangssignal durch den Elektromagneten fließenden Strom veränderlich ist und der dementsprechend veränderte Staudruck in der Düse (11) nach pneumatischer Verstärkung direkt zur Ansteuerung des pneumatischen Stellgliedes (1) benutzt wird, und wobei eine Rückführung der mechanischen Stellgröße in den elektropneumatischen Signalwandler vorgesehen ist, dadurch gekennzeichnet, daß ein Ende des Spannbandes (7) um dessen Längsachse drehbar gelagert ist und daß senkrecht zur Längssachse ein Rückführhebel (12) angeordnet ist, dessen eines Ende mit dem drehbaren Ende des Spannbandes (7) drehfest verbunden und dessen freies Ende mit der Schubstange (2) des pneumatischen Stellgliedes gekoppelt ist.

2. Vorrichtung nach Anspruch 1, dadurch gekennzeichnet, daß das freie Ende des Rückführhebels (12) mittels einer Feder (20) gegen eine mit der Schubstange (2) fest verbundenen Kurvenscheibe (15) vorgespannt ist.

3. Vorrichtung nach Anspruch 1 oder 2, dadurch gekennzeichnet, daß das freie Ende des Rückführhebels (12) über eine Führungsrolle (16) auf der Kurvenscheibe (15) abgestützt ist.

## Claims

1. Device for converting an electrical current signal into a mechanical manipulated variable, consisting essentially of a pneumatic actuator (1) with a push rod (2), a pneumatic amplifier, a compressed air terminal (4) and an electropneumatic signal converter, which has an electromagnet (5) with coil, iron core and air gap, a nozzle/baffle plate device (6) and a lever (8) pivotably mounted on a taut band (7), which lever carries at its one end the baffle plate (9) and at its other end a permanent magnet (10) disposed opposite the air gap of the electromagnet (5), wherein the distance between the baffle plate (9) and the nozzle (11) is variable proportional to the current flowing through the electromagnet as a input signal, and the correspondingly varied back pressure in the nozzle (11) is used after pneumatic amplification direct to trigger the pneumatic actuator (1), and wherein feedback of the mechanical manipulated variable to the electropneumatic signal converter is provided, characterised in that one end of the taut band (7) is rotatably mounted about its longitudinal axis and that a feedback lever (12) is disposed perpendicular to the longitudinal axis with its one end is non-rotatably connected to the rotatable end of the taut band (7) and its free end coupled to the push rod (2) of the pneumatic actuator.

2. Device according to claim 1, characterised in that the free end of the feedback lever (12) is prestressed by means of a spring (20) against a cam disc (15) rigidly connected to the push rod (2).

3. Device according to claim 1 or 2, characterised in that the free end of the feedback lever (12) is supported on the cam disc via a guide pulley (16).

## Revendications

1. Dispositif pour transformer un signal de courant électrique en une grandeur de réglage mécanique, comportant essentiellement un organe de réglage pneumatique (1) avec une bielle (2), un relais amplificateur pneumatique, un raccordement d'air comprimé (4) et un transformateur de signaux électropneumatique qui comporte un électro-aimant (5) comprenant une bobine, un noyau de fer et une fente d'air, un dispositif à buse et à plaque de rebond (6) et un levier (8) qui est monté de façon pivotante sur une bande tendeuse (7) et qui porte, à l'une de ses extrémités, la plaque de rebond (9) et, à son autre extrémité, un aimant permanent (10) agencé de façon opposée à la fente d'air de l'électro-aimant (5), la distance entre la plaque de rebond (9) et la buse (11) pouvant être modifiée proportionnellement au courant s'écoulant comme signal d'entrée à travers l'électro-aimant et la pression dynamique dans la buse (11), modifiée en correspondance, étant utilisée après amplification pneumatique directement pour commander l'organe de réglage pneumatique (1), et un retour de la grandeur de réglage mécanique dans le transformateur de signaux électropneumatique étant prévu,
caractérisé en ce qu'une extrémité de la bande tendeuse (7) est montée de façon rotative autour de son axe longitudinal, et en ce qu'un levier de retour (12) est agencé orthogonalement à l'axe longitudinal, dont l'une des extrémités est reliée, de façon résistant à la torsion, à l'extrémité rotative de la bande tendeuse (7), et dont l'extrémité libre est couplée à la bielle (2) de l'organe de réglage pneumatique.

2. Dispositif selon la revendication 1,
caractérisé en ce que l'extrémité libre du levier de retour (12) est précontrainte, au moyen d'un ressort (20), contre une came (15) solidaire de la bielle (2).

3. Dispositif selon l'une des revendications 1 ou 2,
caractérisé en ce que l'extrémité libre du levier de retour (12) prend appui sur la came (15), par l'intermédiaire d'un galet de guidage (16).
